# EUROPÄISCHE PATENTSCHRIFT

(11) **EP 3 326 465 B1**
(45) Veröffentlichungstag und Bekanntmachung des Hinweises auf die Patenterteilung: **08.01.2020**
(21) Anmeldenummer: 17200781.7
(22) Anmeldetag: 09.11.2017
(51) Int. Cl.: A01N 25/34, A01N 59/16, A01N 61/00, C09D 5/16, C09D 7/61, C08K 3/36

(54) **VERWENDUNG VON BASALT ZUR REDUZIERUNG VON FOULING UND/ODER ALS ANTIBAKTERIELLES MATERIAL, BESCHICHTUNG FÜR EINE OBERFLÄCHE UND VERFAHREN ZUR HERSTELLUNG EINER BESCHICHTUNG**
USE OF BASALT FOR REDUCING FOULING AND/OR AS ANTIBACTERIAL MATERIAL, COATING FOR A SURFACE AND METHOD FOR PRODUCING A COATING
UTILISATION DE BASALTE DESTINÉE À LA RÉDUCTION DES SALISSURES ET/OU UTILISATION DE BASALTE EN TANT QUE MATÉRIAU ANTIBACTÉRIEN, REVÊTEMENT POUR UNE SURFACE ET PROCÉDÉ DE FABRICATION D'UN REVÊTEMENT

(30) Priorität: 25.11.2016 DE 102016223453
(43) Veröffentlichungstag der Anmeldung: 30.05.2018
(73) Patentinhaber: Innovent e.V., 07745 Jena (DE)
(72) Erfinder: PFUCH, Andreas, 99510 Apolda (DE); DÖPEL, Monika, 07381 Pößneck (DE); RAMM, Max, 07768 Kahla (DE); SPANGE, Sebastian, 07586 Kraftsdorf / OT Töppeln (DE); GRÜNLER, Bernd, 07937 Zeulenroda-Triebes (DE)
(74) Vertreter: Liedtke, Markus

(56) Entgegenhaltungen:
- WO-A1-2005/047403
- DE-U1-202005 003 291
- Harel Thomas ET AL: "COPPER IN DECCAN BASALTS (INDIA): REVIEW OF THE ABUNDANCE AND PATTERNS OF DISTRIBUTION", , 1. Januar 2011 (2011-01-01), XP55440692, Gefunden im Internet: URL:http://www.fceia.unr.edu.ar/fisiografi a/volumen79-81/BIFG_79-81_Alexander.pdf

## Beschreibung

Die Erfindung betrifft eine Verwendung von Basalt zur Reduzierung von Fouling und/oder als antibakterielles Material, eine Beschichtung für eine Oberfläche zur Reduzierung von Fouling und/oder als antibakterielles Material sowie ein Verfahren zur Herstellung einer derartigen Beschichtung.

Unter Fouling wird im Folgenden die unerwünschte Ansiedlung von Organismen an technischen Oberflächen unter Wasser, insbesondere an Schiffsrümpfen, und an wasserbaulichen Anlagen aus Holz, Metall oder Kunststoff, insbesondere auch in oder an Kühlkreisläufen, verstanden.

Im Stand der Technik wird davon ausgegangen, dass Basalt grundsätzlich als Antifouling-Material geeignet ist. Die Bestrebungen im Stand der Technik sind daher darauf gerichtet, Basalt zur Verwendung als Antifouling-Material derart zu bearbeiten, dass die mit Wasser in Verbindung kommende Oberfläche des Basalts möglich groß ist. Dazu wird der Basalt beispielsweise geschmolzen und zu möglichst dünnen Fasern verarbeitet.

Im Stand der Technik ist aus EP 1 682 624 B1 eine Antifouling-Beschichtung bekannt, die aus Gewebe gebildet ist, welches aus Basalt-Fasern basiert.

Aus WO 2005/047403 A1 ist eine biozidfreie Antifouling-Beschichtung bekannt, die ein auf Basaltfasern basierendes Flächengebilde enthält.

Aus DE 20 2005 003 291 U1 sind Tauwerk und Schnüre oder Seile mit Antifoulingeigenschaften sowie Fischereinetze bekannt, die diese Schnüre oder Seile enthalten.

Aus Harel Thomas ET AL: "COPPER IN DECCAN BASALTS (INDIA): REVIEW OF THE ABUNDANCE AND PATTERNS OF DISTRIBUTION" vom 01. Januar 2011 ist bekannt, dass je nach Herkunft von Basalt der Gehalt an Kupfer schwanken kann.

Der Erfindung liegt die Aufgabe zu Grunde, eine verbesserte Verwendung von Basalt der eingangs genannten Art, eine verbesserte Beschichtung für eine Oberfläche zur Reduzierung von Fouling und/oder als antibakterielles Material sowie ein verbessertes Verfahren zur Herstellung einer derartigen Beschichtung anzugeben.

Die Aufgabe wird die Verwendung von Basalt betreffend erfindungsgemäß durch die Merkmale gemäß Anspruch 1 gelöst. Die Beschichtung für eine Oberfläche zur Reduzierung von Fouling und/oder als antibakterielles Material betreffend wird die Aufgabe erfindungsgemäß durch die Merkmale gemäß Anspruch 8 gelöst. Das Verfahren zur Herstellung einer derartigen Beschichtung betreffend wird die Aufgabe erfindungsgemäß durch die Merkmale gemäß Anspruch 9 gelöst.

Vorteilhafte Ausgestaltungen der Erfindung sind Gegenstand der Unteransprüche.

Eine Verwendung von Basalt erfolgt zur Reduzierung von Fouling und/oder als antibakterielles Material. Erfindungsgemäß wird ein Basalt verwendet, der
- Kupfer mit einem Anteil von mindestens 100 mg/kg und/oder
- Blei mit einem Anteil von mindestens 10 mg/kg und Arsen mit einem Anteil von mindestens 3 mg/kg und/oder
- Silber mit einem Anteil von mindestens 15 mg/kg enthält.

Die erfindungsgemäße Verwendung ermöglicht eine überraschende, qualitativ zuverlässige und dauerhafte Sicherung zur Reduzierung von Fouling und ermöglicht alternativ oder zusätzlich eine überraschend qualitativ zuverlässige und dauerhafte Sicherung vor einem bakteriellen Befall. Die im Stand der Technik zu verzeichnenden Qualitätsdefizite bei gattungsgemäßer Verwendung von Basalt sind damit überwindbar.

Untersuchungen verschiedener Zusammensetzungen unterschiedlicher Arten von Basalt haben abweichend von bisherigen, gefestigten Auffassungen zu der Erkenntnis geführt, dass Basalt nicht per se als Mittel zur Reduzierung von Fouling und/oder als antibakterielles Material verwendbar ist.

Eine Weiterbildung der erfindungsgemäßen Verwendung sieht vor, dass der Basalt aufgeschmolzen und zu Fasern verarbeitet wird oder ist. Diese Fasern weisen einen Durchmesser zwischen 1 Mikrometer und 20 Mikrometer, bevorzugt zwischen 8 Mikrometer und 12 Mikrometer, auf.

Besonders bevorzugt sind die erfindungsgemäß vorgesehenen Bestandteile des Basalts an der Oberfläche der Fasern in erhöhter Konzentration angeordnet.

Die Fasern weisen dabei gemäß einer ersten Alternative bevorzugt eine Länge von jeweils maximal 5 mm auf, wozu die zunächst hergestellten Fasern derart gekürzt werden. Überraschend hat sich gezeigt, dass derartig kurze Fasern gut als Flock verwendbar sind, welcher besonders einfach auf die zu beschichtende Oberfläche auftragbar ist und die Anti-Fouling-Wirkung und/ oder die antibakterielle Wirkung besonders sicher entfaltet. Bevorzugt werden dazu die Fasern und/oder die Oberfläche statisch aufgeladen, anschließend werden die Fasern auf die mit einer Klebschicht versehene Oberfläche aufgetragen. Dadurch kann die zu beschichtende Oberfläche besonders einfach und besonders sicher, insbesondere besonders homogen, vor Fouling und/oder vor bakteriellem Befall geschützt werden.

Die Fasern weisen gemäß einer zweiten Alternative eine Länge von mehreren cm auf. Derartige Fasern sind zu einem Gewirk oder einem Gelege verarbeitbar, welches die gewünschten Eigenschaften aufweist und flexibel ist.

Eine Weiterbildung der erfindungsgemäßen Verwendung sieht gemäß einer ersten Alternative vor, dass der Basalt zu Pulver verarbeitet wird und als Füllstoff für eine Anwendung mit biozider Wirkung als Additiv für einen Lack zum Beschichten einer Oberfläche verwendet wird. Die Oberfläche ist dadurch sehr einfach und wirksam vor Fouling und/oder bakteriellem Befall durch Auftragen des Lackes zu schützen.

Besonders bevorzugt wird das Additiv derart in den Lack eingebracht, dass es an der dem Wasser zugewandten Fläche des Lacks in erhöhter Konzentration vorliegt. Dies ist über eine Festlegung des Anteils des Additivs im Lack, der Partikelgröße des Additivs und dessen Dichte erzielbar.

Gemäß einer zweiten Alternative ist oder wird der Basalt zu Pulver verarbeitet und als Füllmaterial für einen Verbundwerkstoff und/oder für einen Kunststoff, insbesondere zur Herstellung einer Kunststofffolie, verwendet, also in den Verbundwerkstoff und/oder in den Kunststoff eingemischt. Dies ist besonders vorteilhaft, da der betreffende Verbundwerkstoff und/oder Kunststoff selbst die erwünschten Wirkungen aufweist, ohne mit einer Beschichtung versehen werden zu müssen.

Gemäß einer dritten Alternative ist oder wird der Basalt zu Pulver verarbeitet und in eine SolGel Beschichtung eingebracht. Eine derartige SolGel Beschichtung weist Antifouling- und/oder antibakterielle Eigenschaften auf.

Besonders bevorzugt wird das Füllmaterial derart eingebracht, dass es an der dem Wasser zugewandten Fläche des Verbundwerkstoffs oder des Kunststoffs in erhöhter Konzentration vorliegt. Dies ist über eine Festlegung des Anteils des Füllmaterials im Verbundwerkstoff oder Kunststoff, der Partikelgröße des Füllmaterials und dessen Dichte erzielbar.

Gemäß einer vierten Alternative wird der Basalt zum Beschichten einer Oberfläche auf dieser angeordnet. Die Oberfläche ist dadurch sehr einfach und wirksam vor Fouling und/oder bakteriellem Befall durch Auftragen der Beschichtung zu schützen.

Eine Ausgestaltung der Verwendung von Basalt als antibakterielles Material sieht vor, dass der Basalt
- Si₂O₃ mit einem Masseanteil zwischen 44 % und 60 %,
- FeO und Fe₂O₃ mit einem Masseanteil zwischen 5 % und 16 %,
- Al₂O₃ mit einem Masseanteil zwischen 12 % und 20 %,
- MgO mit einem Masseanteil zwischen 2,9 % und 7 %,
- CaO mit einem Masseanteil zwischen 6,1 % und 12 %,
- Na₂O und K₂O mit einem Masseanteil zwischen 2,5 % und 6,5 % sowie
- TiO₂ mit einem Masseanteil zwischen 1 % und 2 % enthält.

Bei einer Verwendung derartigen Basalts ist eine antibakterielle Wirkung besonders effektiv und dauerhaft.

Eine Beschichtung für eine Oberfläche dient zur Reduzierung von Fouling. Alternativ oder zusätzlich dient eine Beschichtung für eine Oberfläche als antibakterielles Material. Erfindungsgemäß umfasst die Beschichtung Basalt, welches
- Kupfer mit einem Anteil von mindestens 100 mg/kg und/oder
- Blei mit einem Anteil von mindestens 10 mg/kg und Arsen mit einem Anteil von mindestens 3 mg/kg und/oder
- Silber mit einem Anteil von mindestens 15 mg/kg enthält.

Die erfindungsgemäße Beschichtung ermöglicht eine überraschende, qualitativ zuverlässige und dauerhafte Sicherung zur Reduzierung von Fouling und ist alternativ oder zusätzlich ein überraschend qualitativ zuverlässiges und dauerhaftes antibakterielles Material. Die im Stand der Technik zu verzeichnenden Qualitätsdefizite von Beschichtungen, die beliebigen Basalt umfassen, sind damit überwindbar.

Untersuchungen verschiedener Zusammensetzungen unterschiedlicher Arten von Basalt haben zu der Erkenntnis geführt, dass die im Stand der Technik vertretene Auffassung, wonach Basalt per se als Mittel zur Reduzierung von Fouling und/oder als antibakterielles Material geeignet sei, fehlerhaft ist.

Ein Verfahren zur Herstellung einer erfindungsgemäßen Beschichtung sieht erfindungsgemäß vor, dass der Basalt aufgeschmolzen und zu Fasern verarbeitet wird und dass die Fasern auf der zu beschichtenden Oberfläche angeordnet werden. Dadurch ist eine besonders hochwertige Beschichtung herstellbar, da die mit Wasser in Verbindung kommende Oberfläche der Beschichtung wirksam vergrößert wird.

Eine Ausgestaltung dieses Verfahrens sieht vor, dass die Fasern eine Länge von jeweils maximal 5 mm aufweisen. Dazu werden die als Endlosfasern hergestellten Fasern zunächst zerhäckselt und besonders bevorzugt anschließend als Flock auf die zu schützende Oberfläche aufgetragen. Dadurch kann die zu beschichtende Oberfläche besonders einfach und besonders sicher, insbesondere besonders homogen, vor Fouling und/oder vor bakteriellem Befall geschützt werden.

Bevorzugt werden die Fasern durch statische Aufladung auf die Oberfläche aufgetragen werden, welche mit einer Klebschicht versehen ist. Dies ermöglicht in besonders einfacher Weise den vorgenannten Vorteil.

Eine weitere Ausgestaltung des Verfahrens zur Herstellung einer Beschichtung sieht vor, dass der Basalt zu Pulver verarbeitet ist oder wird und
- als Füllstoff für einen Lack zum Beschichten einer Oberfläche verwendet wird oder
- als Füllmaterial für einen Verbundwerkstoff und/oder für einen Kunststoff oder eine Kunststofffolie verwendet wird oder
- als Füllmaterial in eine SolGel Beschichtung eingebracht wird. Mittels dieser Ausgestaltung ist eine erfindungsgemäße Beschichtung mit den vorgenannten Vorteilen auf einfache Weise herstellbar.

Ausführungsbeispiele der Erfindung werden im Folgenden anhand von Zeichnungen näher erläutert.

Darin zeigen:
- Figur 1: ein Diagramm zur Auswertung der antibakteriellen Wirkung von Basalten verschiedener Lagerstätten,
- Figur 2: eine tabellarische Auswertung der Zusammensetzung und der antibakteriellen Wirkung ausgewählter Basalte dieser Lagerstätten, und
- Figur 3: ein Diagramm zur Auswertung der antibakteriellen Wirkung ausgewählter Basalte dieser Lagerstätten jeweils für gemahlene und geschmolzene Proben sowie für Fasern.

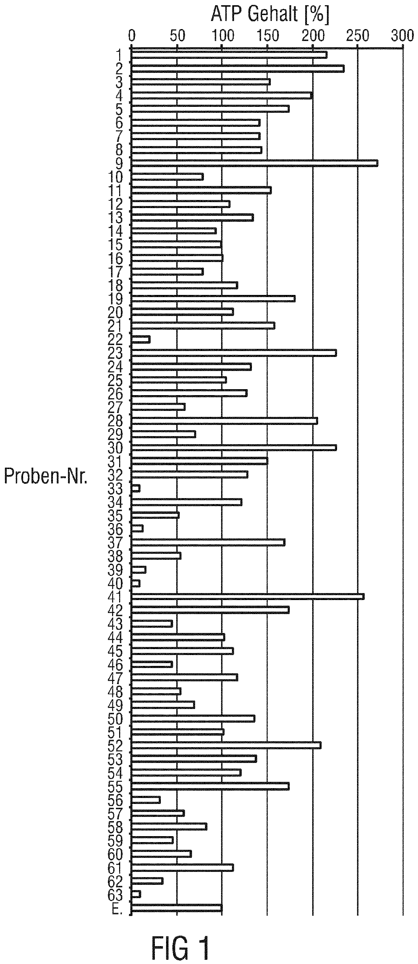

**Figur 1** zeigt ein Diagramm zur Auswertung der antibakteriellen Wirkung von Basalten aus 63 verschiedenen Lagerstätten. Jeder dieser Lagerstätten wurde eine Probe von Basalt entnommen. Diese 63 Proben wurden auf ihre Wirkung auf E.coli Bakterien betreffend analysiert. Hierzu wurden die 63 Proben aufgemahlen, sterilisiert und jeweils zu einer Tablette gepresst. Jede Tablette wurde über 4 Stunden mit einer *E.coli* HB101 Suspension inkubiert. Im Anschluss wurde die bakterielle Aktivität der Suspension mit einer unbelasteten Referenz verglichen. Hierbei zeigte sich, dass ein Basalt mit einem Kupferanteil von min 100 mg/kg eine gute antibakterielle Wirkung aufweist. Je geringer der im Diagramm dargestellte ATP-Wert ist, desto besser ist die antibakterielle Wirkung.

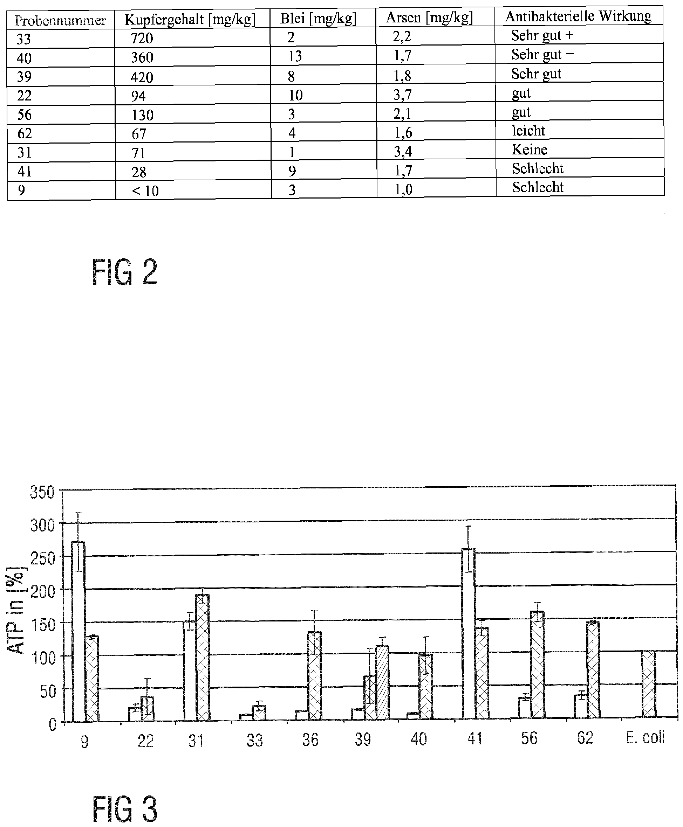

**Figur 2** zeigt eine tabellarische Auswertung der Zusammensetzung und der antibakteriellen Wirkung ausgewählter Basalte der Lagerstätten gemäß Figur 1.

**Figur 3** zeigt ein Diagramm zur Auswertung der antibakteriellen Wirkung der in Figur 2 bezeichneten ausgewählten Basalte jeweils für gemahlene und geschmolzene Proben sowie für Fasern.

Ein Teil jeder Probe wurde jeweils gemahlen, ein zweiter Teil jeder Probe wurde jeweils aufgeschmolzen ein dritter Teil einer Probe wurde nach einem Aufschmelzen zu Fasern verarbeitet. Beim Aufschmelzen einer Probe hat sich die spezifische Oberfläche drastisch reduziert, jedoch konnte bei den aufgeschmolzenen Proben mit erhöhtem Kupferanteil dennoch weiterhin eine gute biozide Wirkung festgestellt werden.

## Patentansprüche

1. Verwendung von Basalt zur Reduzierung von Fouling und/oder als antibakterielles Material, **dadurch gekennzeichnet, dass** der Basalt
- Kupfer mit einem Anteil von mindestens 100 mg/kg und/oder
- Blei mit einem Anteil von mindestens 10 mg/kg und Arsen mit einem Anteil von mindestens 3 mg/kg und/oder
- Silber mit einem Anteil von mindestens 15 mg/kg enthält.

2. Verwendung nach Anspruch 1, **dadurch gekennzeichnet, dass** der Basalt aufgeschmolzen und zu Fasern verarbeitet wird oder ist.

3. Verwendung nach Anspruch 2, **dadurch gekennzeichnet, dass** die Fasern eine Länge von jeweils maximal 5 mm aufweisen.

4. Verwendung nach Anspruch 2 oder 3, **dadurch gekennzeichnet,**
**dass** die Fasern als Flock auf eine Oberfläche aufgetragen werden oder sind.

5. Verwendung von Basalt als antibakterielles Material nach einem der Ansprüche 2 bis 4, **dadurch gekennzeichnet, dass** der Basalt
- Si₂O₃ mit einem Masseanteil zwischen 44 % und 60 %,
- FeO und Fe₂O₃ mit einem Masseanteil zwischen 5 % und 16 %,
- Al₂O₃ mit einem Masseanteil zwischen 12 % und 20 %,
- MgO mit einem Masseanteil zwischen 2,9 % und 7 %,
- CaO mit einem Masseanteil zwischen 6,1 % und 12 %,
- Na₂O und K₂O mit einem Masseanteil zwischen 2,5 % und 6,5 % sowie
- TiO2 mit einem Masseanteil zwischen 1 % und 2 % enthält.

6. Verwendung nach Anspruch 1, **dadurch gekennzeichnet, dass** der Basalt zu Pulver verarbeitet ist und
- als Füllstoff für eine Anwendung mit biozider Wirkung als Additiv für einen Lack zum Beschichten einer Oberfläche verwendet wird oder
- als Füllmaterial für einen Verbundwerkstoff und/oder für einen Kunststoff oder eine Kunststofffolie verwendet wird oder
- als Füllmaterial in eine SolGel Beschichtung eingebracht wird.

7. Verwendung nach einem der vorhergehenden Ansprüche, **dadurch gekennzeichnet, dass** der Basalt zum Beschichten einer Oberfläche auf dieser angeordnet ist oder wird.

8. Beschichtung für eine Oberfläche zur Reduzierung von Fouling und/oder als antibakterielles Material, **gekennzeichnet durch** Basalt, welches
- Kupfer mit einem Anteil von mindestens 100 mg/kg und/oder
- Blei mit einem Anteil von mindestens 10 mg/kg und Arsen mit einem Anteil von mindestens 3 mg/kg und/oder
- Silber mit einem Anteil von mindestens 15 mg/kg enthält.

9. Verfahren zur Herstellung einer Beschichtung nach Anspruch 8, **dadurch gekennzeichnet, dass** der Basalt aufgeschmolzen und zu Fasern verarbeitet wird und dass die Fasern auf der zu beschichtenden Oberfläche angeordnet werden.

10. Verfahren nach Anspruch 9, **dadurch gekennzeichnet, dass** die Fasern eine Länge von jeweils maximal 5 mm aufweisen.

11. Verfahren nach Anspruch 9 oder 10, **dadurch gekennzeichnet, dass** die Fasern als Flock auf die Oberfläche aufgetragen werden.

12. Verfahren nach Anspruch 11, **dadurch gekennzeichnet, dass** die Fasern durch statische Aufladung auf die Oberfläche aufgetragen werden, welche mit einer Klebschicht versehen ist.

13. Verfahren zur Herstellung einer Beschichtung nach Anspruch 8, **dadurch gekennzeichnet, dass** der Basalt zu Pulver verarbeitet ist oder wird und
- als Füllstoff für einen Lack zum Beschichten einer Oberfläche verwendet wird oder
- als Füllmaterial für einen Verbundwerkstoff und/oder für einen Kunststoff oder eine Kunststofffolie verwendet wird oder
- als Füllmaterial in eine SolGel Beschichtung eingebracht wird.

## Claims

1. Use of basalt for reducing fouling and/or as antibacterial material, **characterized in that** the basalt contains
- copper in a proportion of at least 100 mg/kg and/or
- lead in a proportion of at least 10 mg/kg and arsenic in a proportion of at least 3 mg/kg and/or
- silver in a proportion of at least 15 mg/kg.

2. Use according to Claim 1, **characterized in that** the basalt is or has been melted and processed to form fibres.

3. Use according to Claim 2, **characterized in that** the fibres have a length of in each case not more than 5 mm.

4. Use according to Claim 2 or 3, **characterized in that** the fibres are or have been applied as flock to a surface.

5. Use of basalt as antibacterial material according to any of Claims 2 to 4, **characterized in that** the basalt contains
- Si₂O₃ in a proportion by mass of from 44% to 60%,
- FeO and Fe₂O₃ in a proportion by mass of from 5% to 16%,
- Al₂O₃ in a proportion by mass of from 12% to 20%,
- MgO in a proportion by mass of from 2.9% to 7%,
- CaO in a proportion by mass of from 6.1% to 12%,
- Na₂O and K₂O in a proportion by mass of from 2.5% to 6.5% and
- TiO2 in a proportion by mass of from 1% to 2%.

6. Use according to Claim 1, **characterized in that** the basalt has been processed to give a powder and
- is used as filler for a use having biocidal action as additive for a surface coating composition for coating a surface or
- is used as filler material for a composite material and/or for a polymer or a polymer film or
- is introduced as filler material into a sol gel coating.

7. Use according to any of the preceding claims, **characterized in that** the basalt has been or is arranged on a surface in order to coat the latter.

8. Coating for a surface for reducing fouling and/or as anti bacterial material, **characterized by** basalt which contains
- copper in a proportion of at least 100 mg/kg and/or
- lead in a proportion of at least 10 mg/kg and arsenic in a proportion of at least 3 mg/kg and/or
- silver in a proportion of at least 15 mg/kg.

9. Process for producing a coating according to Claim 8, **characterized in that** the basalt is melted and processed to form fibres and **in that** the fibres are arranged on the surface to be coated.

10. Process according to Claim 9, **characterized in that** the fibres have a length of in each case not more than 5 mm.

11. Process according to Claim 9 or 10, **characterized in that** the fibres are applied as flock to the surface.

12. Process according to Claim 11, **characterized in that** the fibres are applied by static charging to the surface which is provided with an adhesive layer.

13. Process for producing a coating according to Claim 8, **characterized in that** the basalt has been or is processed to give powder and
- is used as filler for a surface coating composition for coating a surface or
- is used as filler material for a composite material and/or for a polymer or a polymer film or
- is introduced as filler material into a sol gel coating.

## Revendications

1. Utilisation de basalte pour la réduction des salissures et/ou comme matériau antibactérien, **caractérisée en ce que** le basalte contient
- du cuivre en une proportion d'au moins 100 mg/kg et/ou
- du plomb en une proportion d'au moins 10 mg/kg et de l'arsenic en une proportion d'au moins 3 mg/kg et/ou
- de l'argent en une proportion d'au moins 15 mg/kg.

2. Utilisation selon la revendication 1, **caractérisée en ce que** le basalte est ou a été fondu et transformé en fibres.

3. Utilisation selon la revendication 2, **caractérisée en ce que** les fibres présentent une longueur à chaque fois d'au maximum 5 mm.

4. Utilisation selon la revendication 2 ou 3, **caractérisée en ce que** les fibres sont ou ont été appliquées sous forme de floc sur une surface.

5. Utilisation de basalte en tant que matériau antibactérien selon l'une quelconque des revendications 2 à 4, **caractérisée en ce que** le basalte contient
- du Si₂O₃ en une proportion massique entre 44% et 60%,
- du FeO et du Fe₂O₃ en une proportion massique entre 5% et 16%,
- de l'Al₂O₃ en une proportion massique entre 12% et 20%,
- du MgO en une proportion massique entre 2,9% et 7%,
- du CaO en une proportion massique entre 6,1% et 12%,
- du Na₂O et du K₂O en une proportion massique entre 2,5% et 6,5%,
- du TiO₂ en une proportion massique entre 1% et 2%.

6. Utilisation selon la revendication 1, **caractérisée en ce que** le basalte a été transformé en poudre et
- est utilisé comme charge pour une mise en œuvre avec un effet biocide en tant qu'additif pour une laque pour le revêtement d'une surface ou
- est utilisé comme matière de charge pour un matériau composite et/ou pour un matériau synthétique ou une feuille en matériau synthétique ou
- est introduit en tant que matière de charge dans un revêtement sol-gel.

7. Utilisation selon l'une quelconque des revendications précédentes, **caractérisée en ce que** le basalte a été ou est disposé sur une surface pour le revêtement de celle-ci.

8. Revêtement pour une surface pour la réduction des salissures et/ou comme matériau antibactérien, **caractérisé par** du basalte qui contient
- du cuivre en une proportion d'au moins 100 mg/kg et/ou
- du plomb en une proportion d'au moins 10 mg/kg et de l'arsenic en une proportion d'au moins 3 mg/kg et/ou
- de l'argent en une proportion d'au moins 15 mg/kg.

9. Procédé pour la fabrication d'un revêtement selon la revendication 8, **caractérisé en ce que** le basalte est fondu et transformé en fibres et **en ce que** les fibres sont disposées sur la surface à revêtir.

10. Procédé selon la revendication 9, **caractérisé en ce que** les fibres présentent une longueur à chaque fois d'au maximum 5 mm.

11. Procédé selon la revendication 9 ou 10, **caractérisé en ce que** les fibres sont appliquées sous forme de floc sur la surface.

12. Procédé selon la revendication 11, **caractérisé en ce que** les fibres sont appliquées par chargement statique sur la surface, qui est pourvue d'une couche adhésive.

13. Procédé pour la fabrication d'un revêtement selon la revendication 8, **caractérisé en ce que** le basalte a été ou est transformé en poudre et
- est utilisé comme charge pour une laque pour le revêtement d'une surface ou
- est utilisé comme matière de charge pour un matériau composite et/ou pour un matériau synthétique ou une feuille en matériau synthétique ou
- est introduit en tant que matière de charge dans un revêtement sol-gel.
